**Europäisches Patentamt**

**European Patent Office**

**Office européen des brevets**

(19)

(11) Veröffentlichungsnummer: **0 017 089**
B1

(12)

# EUROPÄISCHE PATENTSCHRIFT

(45) Veröffentlichungstag der Patentschrift:
18.05.83

(51) Int. Cl.³: **E 04 H 5/08,** A 01 K 1/00

(21) Anmeldenummer: **80101450.7**

(22) Anmeldetag: **20.03.80**

(54) **Stall für die Tierhaltung.**

(30) Priorität: **23.03.79 DE 2911380**

(43) Veröffentlichungstag der Anmeldung:
**15.10.80 Patentblatt 80/21**

(45) Bekanntmachung des Hinweises auf die Patenterteilung:
**18.05.83 Patentblatt 83/20**

(84) Benannte Vertragsstaaten:
**AT BE CH FR GB IT LU NL SE**

(56) Entgegenhaltungen:
**CH-A-538 243**
**DE-U-1 977 235**
**US-A-1 590 982**
**US-A-3 191 578**

(73) Patentinhaber: **Kamppeter, Gerhard, Langenberger
Strasse 101, D-4835 Rietberg 3 (DE)**

(72) Erfinder: **Kamppeter, Gerhard, Langenberger
Strasse 101, D-4835 Rietberg 3 (DE)**

(74) Vertreter: **Rehberg, Elmar, Dipl.-Ing. et al,
Patentanwälte, Dipl.-Ing. R. Bibrach Dipl.-Ing. E.
Rehberg Postfach 7 38 Pütterweg 6, D-3400 Göttingen
(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Stall für die Tierhaltung

Die Erfindung bezieht sich auf einen Stall für die Tierhaltung mit Umfangswänden und Zwischenwänden, die den Innenraum in Buchten und Gänge unterteilen, und mit einem Dach sowie ggf. einer Unterkellerung für die Aufbereitung der Jauche, wobei die Umfangswände nach Art eines Sechsecks, insbesondere eines regelmässigen Sechsecks, angeordnet sind.

Ein derartiger Stall für die Tierhaltung ist aus der US-A-1 590 982 bekannt. Dieser Stall besitzt nach Art eines regelmässigen Sechsecks angeordnete Umfangswände. In der Stallmitte ist zu Heizzwecken ein Ofen angeordnet, der innerhalb eines hochgesetzten sechseckigen Umganges über einen Gang, beispielsweise zu Inspektionszwecken erreichbar ist. Von dieser hochgesetzten sechseckigen Plattform her ist auch eine Fütterung der Schweine mit den Jungtieren möglich. Von den Ecken der Umfangswände reichen jeweils Zwischenwände bis zu dieser sechseckigen Plattform in der Stallmitte, so dass die Stallfläche mit Ausnahme der für den Gang und den Ofen benötigten Fläche in sechs etwa parallelogrammartige Buchten unterteilt ist. Sämtliche in einer Bucht jeweils gehaltenen Tiere können innerhalb der Bucht sich frei bewegen, wobei die Teile der Bucht, die unterhalb der erhöht angeordneten Plattform liegen, nur für die Jungtiere zugänglich sind. Mit einem solchen Stall lässt sich nur eine begrenzte Anzahl von Tieren in jeweils relativ gross gestalteten Buchten halten. Eine besondere Anpassung der Buchten an den jeweiligen Anwendungsfall ist nicht vorgesehen.

Ein weiterer Stall für die Tierhaltung ist aus der DE-B-2 439 251 als Rundstall mit kreisringförmiger Umfangswand bekannt. Der Rundstall ist unterkellert. Der Zwischenboden zwischen Stallraum und Keller – zugleich Stallboden und Kellerdecke – ist mindestens teilweise als Spaltenboden ausgebildet. Der Rundstall ist voll unterkellert; der gesamte Kellerraum dient als Jauche-Aufbereitungsraum. Im Rundstall-Kellerraum ist zur laufenden Einmischung des Frischdunges in die Jauche und deren Aufbereitung eine Rühreinrichtung eingebaut. Es ist weiterhin ein Lüftungssystem vorgesehen. Die Umfangswand und das Dach des Rundstalles sind wärmeisoliert. Der kreisrunde Grundriss des Rundstalles ist zwar vorteilhaft diejenige Bauweise, die bei geringstmöglicher Umfangsfläche einen grösstmöglichen Stallraum zur Verfügung stellt, jedoch sind mit dieser Bauweise auch verschiedene Nachteile verbunden. Beispielsweise erfordert der Stall schon bei der Herstellung der Umfangswand den Einsatz einer teuren Schalung. Diese Schalung ist nur für einen ganz bestimmten Durchmesser verwendbar. Wenn der Stall grösser oder kleiner gebaut werden soll, ändert sich auch die Krümmung der Umfangswand, so dass hier wieder andere Schalungselemente eingesetzt werden müssen. Die Wände können auch praktisch nur aus Beton angefertigt werden. Weiterhin ist nachteilig, dass sich ein solcher Stall nicht universell einsetzen lässt. Sinnvoll wird der Rundstall nur für Mast eingesetzt. Auch die Abteilung des Innenraumes durch Zwischenwände in Buchten für die Tiere ist nicht optimal, weil die Buchten infolge der bogenförmigen Umfangswand teilweise auch bogenförmig begrenzt sind.

Darüber hinaus sind Ställe für die Tierhaltung mit rechteckigem oder quadratischem Grundriss bekannt. Insbesondere bei rechteckigem Grundriss wird jedoch das Verhältnis von Umfangswand zu Stallfläche ungünstig, ganz abgesehen davon, dass auch eine rechteckförmige Bucht nicht in allen Fällen optimal genutzt werden kann. Es ist deshalb im Stand der Technik bereits vorgeschlagen worden, die Schutzgitter einer rechteckig begrenzten Abferkelbucht leicht schräg aufzustellen, um auf diese Weise die Fläche der Bucht kleiner gestalten zu können. Als Flächenbedarf für eine solche Abferkelbucht erweisen 3, 4 bis 4 m² sich als erforderlich.

Der Erfindung liegt die Aufgabe zugrunde, einen Stall der eingangs beschriebenen Art aufzuzeigen, der bei einfacher Herstellungsmöglichkeit eine verbesserte Buchtengestaltung, angepasst an den jeweiligen Anwendungsfall, zulässt. Weiterhin soll der Stall auf sämtliche Produktionsrichtungen, insbesondere Ferkelerzeugung, Milchviehhaltung, Geflügelaufstellung, Mast usw., umgestellt bzw. auch nachträglich an diese angepasst werden können.

Erfindungsgemäss wird dies dadurch erreicht, dass der Stall in drei parallelogrammförmige Hauptbereiche aufgeteilt ist, von denen jeder durch zwei angrenzende Umfangswände und dazu parallele Innenwände begrenzt ist, und dass jeder Hauptbereich in mindestens einen Gang sowie in einer Anzahl von parallelogrammförmigen, insbesondere rautenförmigen, von jeweils einem Gang aus bedienbaren Buchten aufgeteilt ist, deren Wände parallel zu den Begrenzungswänden des jeweiligen Hauptbereiches verlaufen. Der Vorteil des erfindungsgemässen Stalles liegt zunächst einmal in der einfachen und billigen Bauweise. Es müssen im Vergleich zum Rundstall nur gerade Wandstücke erstellt werden. Diese Umfangswand kann in nahezu jeder Bauweise ausgeführt werden und benötigt keine durchmessergebundenen Schalungsteile. Es ist auch jedes Baumaterial verwendbar, so dass die Umfangswand insbesondere gemauert und sehr einfach wärmeisoliert werden kann. Die Grösse, d.h. die Fläche des Stalles, lässt sich ohne weiteres variabel gestalten und den jeweiligen besonderen Bedürfnissen anpassen. Bei gleicher Stallfläche ist die Umfangswand im Vergleich zum Rundstall nur um 5% länger, jedoch lassen sich die Buchten im Vergleich zum Rundstall weit vorteilhafter gestalten, so dass sich bei gleicher Stallfläche mehr Tiere halten lassen. Für die Zwischenwände können normbare weitgehend gerade ausgebildete Teile und Abtrennungen eingesetzt werden. Keine Bucht ist bodenförmig begrenzt. Vor allen Dingen aber lässt sich der Sechseckstall optimal an sämtliche Produktionsrichtungen anpassen, und zwar mit einem vergleichsweise geringen Aufwand. Auch die Verhältnisse hinsichtlich der Innenbelüftung und der Gülleoxidation im Stall bei entsprechender Unterkellerung lässt sich ohne weiteres optimal gestalten. Der entscheidende Vorteil aber ist, dass sich bei dem sechseckigen Grundriss die Buchten gleichsam automatisch mit parallelogrammförmigem, insbesondere rautenförmigem, Grundriss ergeben, so dass die üblichen rechteckigen Stalleinrichtungen (Abferkelbuchten, Frassliegenbuchten, Liegebox, Tröge usw.) nur in eine Parallelogrammform bzw. Rautenform umzuwandeln sind. Wie insbesondere am Beispiel der Abferkelbucht noch gezeigt wird, können hiermit erhebliche Vorteile verbunden sein. Sämtliche Tierarten können in dem Sechserstall sowohl auf einem planbefestigten wie auch auf einem vollperforierten (Spalten-)Boden aufgestellt werden. Bei der zuletzt genannten Ausbildung kann der gesamte Stall unterkellert werden. Hierbei können die bekannten Gülleoxidationsverfahren mit all ihren Vorteilen zur Anwendung kommen. Dabei sind die sechseckigen Kellerwände auch schon wesentlich besser an die runde Form angeglichen, als dies bei einem quadratischen oder gar rechteckigen Güllebehälter der Fall wäre, so dass bei einem mittig angeordneten Güllebelüfter die Gülle besser zirkulieren kann.

Die durch die Anordnung der Zwischenwände gebildeten Gänge können in einem Winkel von 120° aneinander anschliessen. Auch dies wirkt sich vorteilhaft aus, in dem sich diese Gänge beispielsweise leichter befahren lassen als die Längs- und Quergänge eines rechteckförmigen Stalls, bei dem die Gänge in einem Winkel von 90° aneinander anschliessen.

Der erfindungsgemässe Stall lässt die Anpassung an die verschiedensten Produktionseinrichtungen zu. Bei Anordnung der Zwischenwände für eine Abferkelbucht können mit besonderem Vorteil in den rautenförmigen Buchten Schutzbügel parallel und symmetrisch zu der grossen Diagonale der rautenförmigen Bucht angeordnet sein. Auf diese Weise wird der Platz für die tragende Sau festgelegt und es bleibt noch genügend Platz für die Ferkel. Insgesamt ergibt sich für eine solche Bucht ein Flächenbedarf von ca. 3 m². Zusätzlich kann der Futtertrog in einer spitzwinkligen Ecke der rautenförmigen Bucht integriert angeordnet sein, so dass damit der Flächenbedarf nicht erhöht wird.

Bei Anordnung der Zwischenwände für einen Schweinemaststall kann je ein gemeinsamer Futtertrog zwischen zwei benachbarten parallelogrammförmigen Buchten quer aufgestellt sein. Dies ergibt Vorteile hinsichtlich der Tierhaltung und der Raumausnutzung.

Bei Anordnung der Zwischenwände für einen Bullenmaststall ist im Tierbereich Spaltenboden vorgesehen und die Gänge sind gleichzeitig als Futtertische sowie als Treibgang zum Ein-und Ausstallen der Tiere ausgebildet.

Ausführungsbeispiele der Erfindung sind in der Zeichnung dargestellt und werden im folgenden näher beschrieben. Es zeigen:

Fig. 1 einen schematisierten Grundriss des Stalles als Abferkelstall,

Fig. 2 einen schematisierten Grundriss des Stalles als Sauenstall,

Fig. 3 einen schematisierten Grundriss des Stalles als Schweinemaststall, und

Fig. 4 einen schematisierten Grundriss des Stalles als Bullenmaststall.

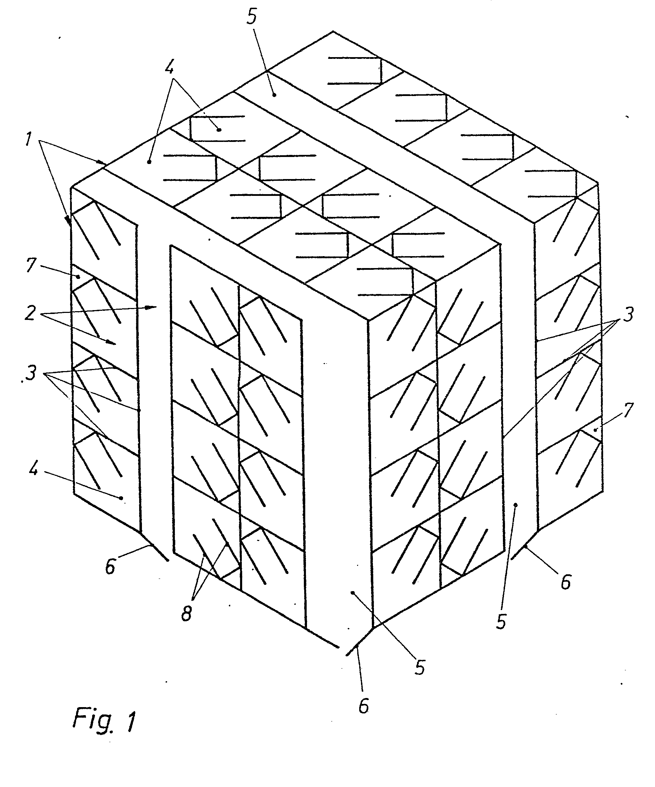

Sämtliche Ställe besitzen eine Umfangswand 1, die nach Art eines Sechsecks, insbesondere eines regelmässigen Sechsecks, angeordnet ist. Auf jeden Fall sind die einander parallelen Teile der Umfangswand 1 gleichlang ausgebildet. Der Innenraum 2 ist durch Zwischenwände 3 unterteilt, so dass auf diese Weise Buchten 4 für die Tiere und Gänge 5, die vielerlei Funktionen haben können, gebildet sind. Der in Fig. 1 dargestellte Abferkelstall besitzt drei Türen 6. Bei optimaler Raumausnutzung sämtlicher verschiedener dargestellter Ställe ergibt sich die Besonderheit, dass der Stall aber mindestens zwei Türen aufweisen muss.

Die in Fig. 1 dargestellte Einrichtungsvariante als Abferkelstall kann insbesondere in Verbindung mit einer automatischen Fütterungsanlage, z.B. Rohrfutteranlage, sehr günstig gestaltet werden. Es werden beispielsweise Futtergänge eingespart, so dass der Treibgang der Sauen gleichzeitig den Kontrollgang für das Bedienungspersonal darstellt. Die Anordnung der als Abferkelboxen ausgebildeten Buchten 4 ermöglicht eine Unterteilung des Stalles in drei gleichgrosse Abteile, wodurch die Rein-Raus-Methode ermöglicht wird.

Jede einzelne als Anbindeabferkelbucht ausgebildete Bucht 4 besitzt hier rautenförmigen Querschnitt, so dass die Grundfläche der Bucht 4 auch weniger als 3 m² betragen kann. Trotzdem werden bei integriertem Futtertrog 7 noch alle Funktionsmasse der Sau und der Ferkel gewährleistet. Im Vergleich dazu erfüllt eine rechteckige Abferkelbucht mit 3 m² Grundfläche und integriertem Trog noch nicht einmal bei diagonaler Aufstallung die Forderung nach einer Liegeflächentiefe von 2,1 m für die ferkelführende Sau. Die Schutzbügel 8 jeder Bucht 4 sind parallel und symmetrisch der grossen Diagonale der rautenförmigen Bucht 4 angeordnet.

Es ist ersichtlich, dass bei entsprechend weitergeführter Stallunterteilung der Abferkelstall gemäss Fig. 1 auch in Form eines nicht regelmässigen Sechsecks vergrössert oder verkleinert werden kann, indem die beiden Teilwände der Umfangswand 1, in denen die Türen 6 angeordnet sind, parallel verschoben werden.

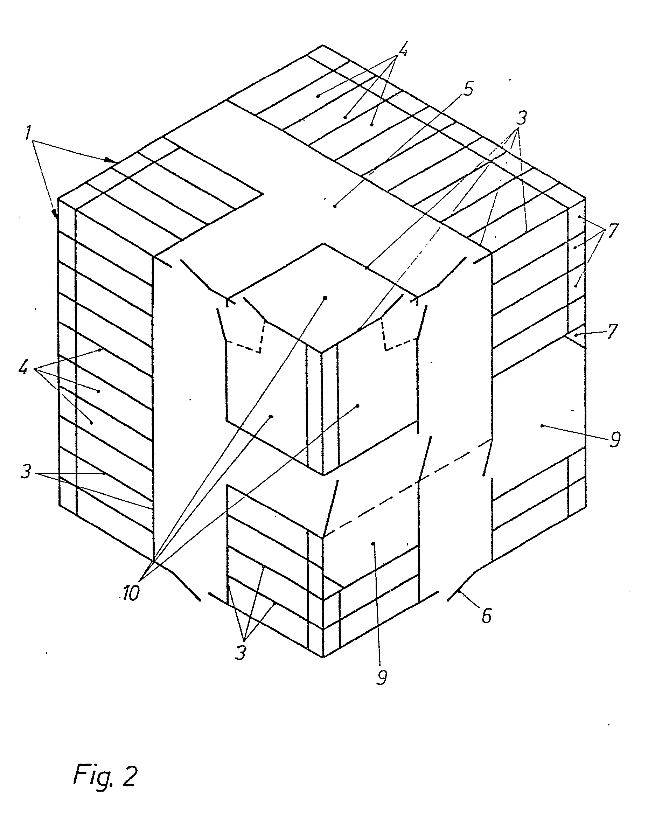

Fig. 2 zeigt einen Sauenstall mit zwei Buchten 9 für zwei Eber und gesonderten Buchten 10 in der Stallmitte für die Nachzucht. Die Sauen sind während der Fütterung, die automatisch erfolgt, in den Buchten 4 fixiert, die hier als selbstfang-Fressliegebuchten ausgebildet sind. Die Gänge 5 dienen als Lauf- und Kotgänge, dann zum ungestörten Kontrollieren der Tiere, d.h. die ansonsten üblichen Futter- und Kontrollgänge bzw. Treibgänge entfallen in diesem Stall gänzlich, was eine zusätzliche Baukostenersparnis bedeutet.

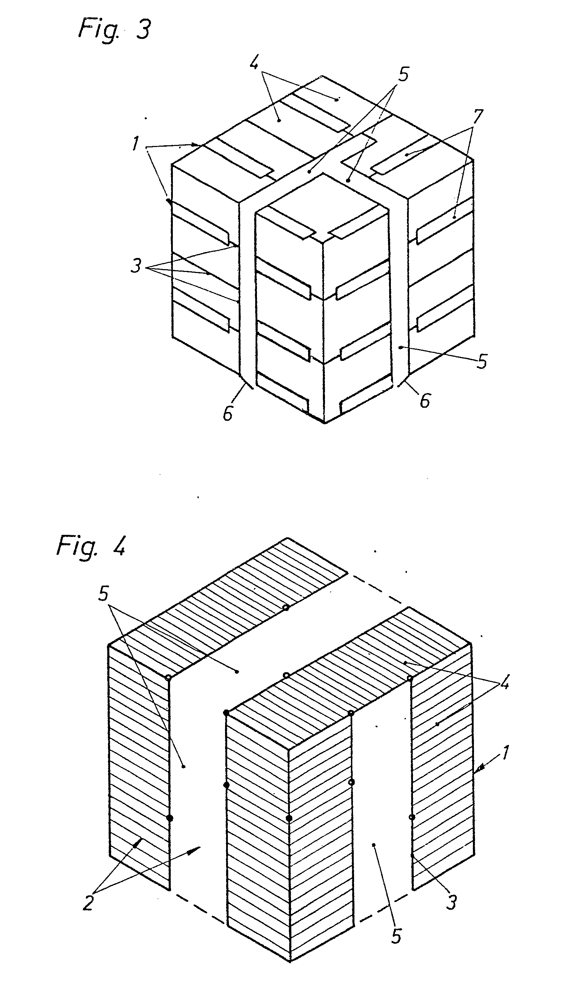

Fig. 3 zeigt die Einrichtung eines Schweinemaststalles. Die Tröge 7 sind hier quer aufgestellt und jeweils zwei benachbarten Buchten 4 zugeordnet.

Fig. 4 schliesslich zeigt die Einrichtung des Stalles als Bullenmaststall mit Spaltenboden im Tierbereich. Der Stall ist voll unterkellert und ermöglicht so die Güllebelüftung innerhalb des Stallgebäudes. Die Gänge 5 sind als Futtertische ausgebildet und mit dem Schlepper befahrbar. Sie dienen gleichzeitig als Treibgang zum Ein- und Ausstallen der Tiere.

### Patentansprüche

1. Stall für die Tierhaltung mit Umfangswänden (1) und Zwischenwänden (3), die den Innenraum in Buchten (4) und Gänge (5) unterteilen, und mit einem Dach sowie ggf. einer Unterkellerung für die Aufbereitung der Jauche, wobei die Umfangswände (1) nach Art eines Sechsecks, insbesondere eines regelmässigen Sechsecks, angeordnet sind, dadurch gekennzeichnet, dass der Stall in drei parallelogrammförmige Hauptbereiche aufgeteilt ist, von denen jeder durch zwei angrenzende Umfangswände (1) und dazu parallele Innenwände begrenzt ist, und dass jeder Hauptbereich in mindestens einen Gang (5) sowie in eine Anzahl von parallelogrammförmigen, insbesondere rautenförmigen, von jeweils einem Gang aus bedienbaren Buchten (4) aufgeteilt ist, deren Wände (3) parallel zu den Begrenzungswänden des jeweiligen Hauptbereiches verlaufen.

2. Stall nach Anspruch 1, dadurch gekennzeichnet, dass die durch die Anordnung der Zwischenwände (3) gebildeten Gänge (5) in einem Winkel von 120° aneinander anschliessen.

3. Stall nach Anspruch 1 oder 2, dadurch gekennzeichnet, dass bei Anordnung der Zwischenwände (3) für einen Abferkelstall in den rautenförmigen Buchten (4) Schutzbügel (8) parallel und symmetrisch zu der grossen Diagonale der rautenförmigen Bucht (4) angeordnet sind.

4. Stall nach Anspruch 3, dadurch gekennzeichnet, dass der Futtertrog (7) in einer spitzwinkligen Ecke der rautenförmigen Bucht (4) integriert angeordnet ist.

5. Stall nach Anspruch 1 oder 2, dadurch gekennzeichnet, dass bei Anordnung der Zwischenwände (3) für einen Schweinemaststall je ein gemeinsamer Futtertrog (7) zwischen zwei benachbarten parallelogrammförmigen Buchten (4) quer aufgestellt ist.

6. Stall nach Anspruch 1 oder 2, dadurch gekennzeichnet, dass bei Anordnung der Zwischenwände (3) für einen Bullenmaststall im Tierbereich Spaltenboden vorgesehen ist und die Gänge (5) gleichzeitig als Futtertische sowie als Treibgang zum Ein- und Ausstallen der Tiere ausgebildet sind.

### Claims

1. Stall for keeping animals, with peripheral walls (1) and partition walls (3) which subdivide the interior into bays (4) and corridors (5), and with a roof and, if appropriate, a basement for processing the liquid manure, the peripheral walls (1) being arranged in the form of a hexagon, especially a regular hexagon, characterised in that the stall is divided into three parallelogram-shaped main regions, each of which is limited by two adjoining peripheral walls (1) and inner walls parallel thereto, and in that each main region is divided into at least one corridor (5) and into a number of parallelogram-shaped, especially rhomboid, bays (4) which can each be serviced from a corridor and the walls (3) of which extend parallel to the limiting walls of the particular main region.

2. Stall according to Claim 1, caracterised in that the corridors (5) formed as a result of the arrangement of the partition walls (3) adjoin one another at an angle of 120°.

3. Stall according to Claim 1 or 2, characterised in that when the partition walls (3) are arranged for a farrowing stall protective straps (8) are arranged in the rhomboid bays (4) parallel and symmetrical to the large diagonal of the rhomboid bay (4).

4. Stall according to Claim 3, characterised in that the feed trough (7) is arranged integrated in an acuteangled corner of the rhomboid bay (4).

5. Stall according to Claim 1 or 2, characterised in that when the partition walls (3) are arranged for a pig-fattening stall a common feed trough (7) is erected transversely between each two adjacent parallelogram-shaped bays (4).

6. Stall according to Claim 1 or 2, characterised in that when the partition walls (3) are arranged for a bull-fattening stall a slatted floor is provided in the animal region, and the corridors (5) are designed simultaneously as feed tables and as a driving corridor for moving the animals into and out of the stall.

### Revendications

1. Etable pour animaux comportant des parois périphériques (1) et des parois intermédiaires (3), qui divisent l'intérieur en stalles (4) et couloirs (5) ainsi qu'un toit et éventuellement une cave pour le traitement du purin, les parois périphériques (1) étant disposées à la façon d'un hexagone, en particulier d'un hexagone régulier, caractérisée par le fait que l'étable est divisée en trois zones principales parallélépipédiques, dont chacune est délimitée par deux parois périphériques voisines (1) et des parois intérieures qui leur sont parallèles et par le fait que chaque zone principale est divisée en au moins un couloir (5) ainsi qu'en un certain nombre de stalles (4) parallélépipédiques, en particulier en losange, et desservies chacune par un couloir, les parois (3) des stalles étant parallèles aux parois délimitant la zone principale correspondante.

2. Etable suivant la revendication 1, caractérisée par le fait que les couloirs (5), formés par la disposition des parois intermédiaires (3), se raccordent les uns aux autres sous un angle de 120°.

3. Etable suivant une quelconque des revendications 1 et 2, caractérisée par le fait que, dans la disposition des parois intermédiaires (3) pour une porcherie de mise bas, des étriers protecteurs (8) sont disposés dans les stalles (4) en losanges, parallèlement et symétriquement par rapport à la grande diagonale des losanges.

4. Etable suivant la revendication 3, caractérisée par le fait que la mangeoire (7) est intégrée dans un coin à angle aigu de la stalle (4) en losange.

5. Etable suivant une quelconque des revendications 1 et 2, caractérisée par le fait que, dans la disposition des parois intermédiaires (3) pour une porcherie d'engraissement, une mangeoire commune (7) est installée chaque fois transversalement entre deux stalles voisines (4) parallélépipédiques.

6. Etable suivant une quelconque des revendications 1 et 2, caractérisée par le fait que, dans la disposition des parois intermédiaires (3) pour une étable d'engraissement de taureaux, il est prévu un caillebotis dans la zone des animaux, les couloirs (5) étant conçus en même temps comme des tables d'alimentation ainsi que comme des couloirs de déplacement des animaux, pour l'entrée et la sortie de ceux-ci.

Fig. 1

Fig. 2

*Fig. 3*

*Fig. 4*